# EUROPEAN PATENT SPECIFICATION

(11) **EP 1 700 765 B1**
(45) Date of publication and mention of the grant of the patent: **22.10.2008**
(21) Application number: 05101777.0
(22) Date of filing: 08.03.2005
(51) Int. Cl.: B62B 5/00

(54) **Shopping cart**
Einkaufswagen
Chariot d'achat

(43) Date of publication of application: 13.09.2006
(73) Proprietor: W.H.Y. van Blijenburgh B.V., 3436 ZW Nieuwegein (NL)
(72) Inventor: Van Blijenburgh, Wouter Hendrik Ydo, 3436 ZW, Nieuwegein (NL)
(74) Representative: Voncken, Bartholomeus Maria Ch.

(56) References cited:
- AT-U1- 7 098
- FR-A- 2 673 587
- FR-A- 2 781 745
- US-A- 4 369 985

## Description

The invention relates to a shopping cart according to the preamble of claim 1. Such a shopping cart is known from FR-A-2.781.745.

Generally, a common shopping cart is used by customers in supermarkets or alike. Upon arrival at the supermarket the customer retrieves a shopping cart from a collection site (where the shopping carts are accumulated) and takes it along into the supermarket. The goods which the customer wishes to buy are put into the container, and when all desired goods have been collected the shopping cart is taken along a cash point. Thereafter the acquired goods are transferred from the container into other means, such as for example shopping bags or a car. Finally the emptied shopping cart is returned to the collection site.

The use of such a known shopping cart involves a number of steps which do not directly relate to its main use (collecting and transporting goods in a supermarket or alike). Such additional steps, among others, comprise retrieving a shopping cart from a collection site, transferring the acquired goods to other means (shopping bags, car or alike) and returning the shopping cart to the collection site.

A shopping cart in accordance with the above state of the art document can be used as a personalized shopping cart, i.e. a shopping cart which is in the possession of a customer and which can be brought along with the customer when going shopping and which, when the shopping has been completed, will not remain at the shopping site (supermarket or alike). When the container is filled with goods the shopping cart can be moved into close proximity of the loading area of a car, after which the locking means are deactivated for allowing a rotation of the container relative to the frame, and the container is rotated in such a manner that its forward end is lifted, such that said forward end can be slid into the loading compartment of the vehicle while, meanwhile, the frame is collapsed. As a result a user can stow the entire shopping cart with goods contained in the container into the loading compartment of its car.

The rotation of the container relative to the frame allows the forward end of the container to be elevated above the level of the loading compartment. Generally, the level of such a loading compartment of a car will be higher then the lower side of a container of a shopping cart. Although it would be possible to provide a common state of the art shopping cart with a container at an elevated level, such that it at least partially could be manipulated into the loading compartment of a car, but in such a case said shopping cart would have an adverse elevated position of its centre of gravity, especially when goods are contained into the container.

Because the frame of the above state of the art shopping cart according to FR-A-2.781.745 comprises forward and rearward legs which meet at their upper ends and which diverge downwardly, and a mechanism is provided for reducing the angle between the forward and rearward legs when the container is rotated such around the transverse axis of rotation that the forward end of the container is lifted, a reduction of the angle between the forward and rearward legs will lead to lifting the rotation means, such that the entire container is lifted, apart from being lifted at its forward end as a result from a rotation as explained above.

It is an object of the present invention to provide an improved shopping cart of the type referred to above.

Thus, in accordance with the invention said mechanism comprises a slide which is slidable along a forward or rearward leg, a first linking arm having a first end hingeably connected to the container and having a second end hingeably connected to the slide, and a second linking arm having a first end hingeably connected to the corresponding rearward or forward leg and having a second end hingeably connected to the slide, and wherein the slide is lockable to the respective leg.

When the container is rotated, the first linking arm will induce a movement of the slide along the respective leg, such that a corresponding movement of the second linking arm will result, leading to the desired reduction of the angle between the forward and rearward legs.

In one embodiment, the slide is slidable along a rearward leg. However, it is also possible that said slide is slidable along a forward leg. In both cases it is possible to position and dimension the slide and linking arms in such a manner, that a rotating of the container to lift its forward end leads to a reduction of the angle between the forward and rearward legs.

According to still a further embodiment of the shopping cart in accordance with the present invention, the upper ends of the forward and rearward legs and the rotation means having said transverse axis of rotation are defined in a second slide which can slide along the container and which is provided with second locking means for preventing or allowing a sliding movement of the second slide relative to the container, and wherein the first linking arm is releasable from the container or the slide.

Such a second slide allows the frame to be shifted relative to the container in such a manner, that the outer dimensions of the assembly of container and frame are minimised, especially when the frame is collapsed. For allowing such a sliding movement of the second slide not only the second locking means have to be manipulated in such a manner as to enable such a sliding movement, but also the first linking arm has to be released from the container or the slide. For example, the first linking arm is released from the container.

In accordance with yet another preferred embodiment of the shopping cart, the second slide further hingeably supports a first end of a pushing arm of which a second end is provided with a grip for a user of the shopping cart, and wherein the pushing arm between its ends is provided with a locking member for defining a releasable connection with the container, and wherein the first end of the first linking arm is hingeably connected to said pushing arm at a location between the ends of the pushing arm.

Such a pushing arm with grip not only will be used for pushing the shopping cart along, but also provides an appropriate means for introducing the desired moment for rotating the container without the need for excessive forces, especially when the container is filled with goods.

Finally, in a special embodiment of the shopping cart in accordance with the present invention, the container comprises collapsible sidewalls, the second slide engages said sidewalls and the frame comprises two forward and two rearward legs.

As a result, the dimensions of the assembly of container and frame can be reduced still further.

Hereinafter the invention will be elucidated while referring to the drawing, in which embodiments of a shopping cart in accordance with the present invention are illustrated.
Figure 1 shows, perspectively and schematically, an embodiment of a shopping cart in accordance with the present invention;
figures 2-6 show the use of such a shopping cart, and
figure 7 shows, schematically, a collapsible embodiment of a shopping cart in accordance with the present invention, in a view in accordance with VII in figure 1.

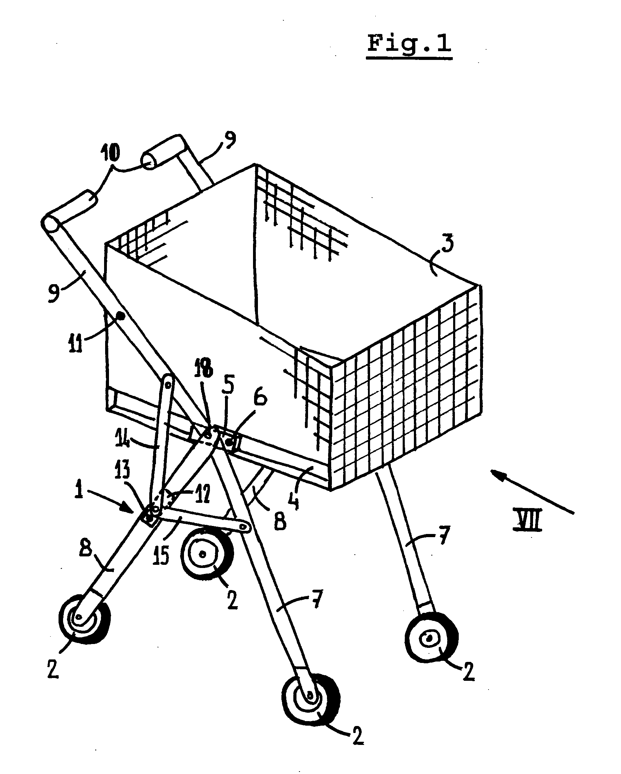

Firstly referring to figure 1, a shopping cart according to the present invention comprises a frame 1 with wheels 2 and a container 3 for goods supported by said frame 1. In a way know per se the container 3 can be made of a wire mesh material. At least some of the wheels 2 may be castor wheels.

On both sides of the container 3, near to its lower end, a guide 4 is provided in which a slide 5 is slidable. The slide 5 is provided with locking means 6 which while active prevent a sliding movement of the slide 5 in a guide 4 and which in an inactive position allow such a sliding movement.

Each slide 5 hingeably carries a forward leg 7 of the frame 1 and a rearward leg 8 of the frame 1. The slide 5 further hingeably supports a pushing arm 9 which is provided with a grip 10. A locking member 11 is provided on said pushing arm 9 for cooperation with the container 3. This locking member 11 defines a releasable connection between the container 3 and the pushing arm 9.

Each rearward leg 8 is provided with a slide 12 which may slide along said rearward leg 8. By means of a locking member 13 the slide 12 is lockable to said rearward leg 8.

A first linking arm 14 has a first end hingeably connected to the pushing arm 9 and a second end hingeably connected to the slide 12. Likewise a second linking arm 15 has a first end hingeably connected to the forward leg 7 and a second end hingeably connected to the slide 12.

The first linking arm 14, second linking arm 15, forward leg 7 and pushing arm 9 together define a four-bar mechanism which is locked when the locking member 13 prevents a sliding movement of the slide 12 relative to the rearward leg 8. However, when the locking member 13 is disabled, slide 12 can slide along the rearward leg 8 and the four-bar mechanism can change its position.

During normal use of the shopping cart locking means 6, locking member 11 and locking member 13 are operative. Goods can be positioned into the container 3 and the shopping cart can be manoeuvred as desired.

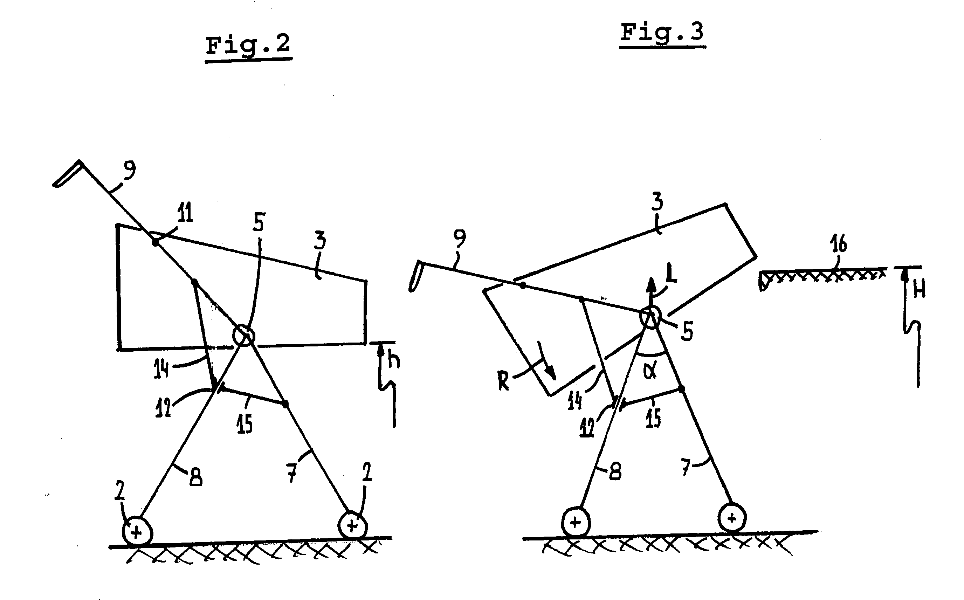

Figure 2 shows the shopping cart schematically in a side-elevational view in its position as illustrated in figure 1. It is noted, that in this schematical view (as will apply also to figures 3-6) slide 5 has been represented by a circle and locking means 6 and locking member 13 have not been illustrated for clarity's sake.

The lower side of the container 3 has a certain height h above the ground surface. Such height h generally will be less than the height H (figure 3) of a loading compartment 16 of a car. When the shopping cart approaches such a loading compartment 16, locking member 13 is disabled, and the pushing arm 9 is pushed downward, such that the container 3 will pivot around a transverse axes of rotation 18 (see figure 1) defined in the slide 5. Such a rotation has been indicated by arrow R in figure 3. As a result of this rotation R the first linking arm 14 pushes slide 12 downwards along the rearward leg 8, as a result of which the second linking arm 15 also is moved, which in result will lead to a corresponding movement (rotation) of the forward leg 7 towards the rearward leg 8. This means, that the angle α enclosed by both legs 7 and 8 is reduced. As a further result of such a reduction of angle α slide 5 is lifted (arrow L in figure 3), such that the container 3 is also lifted in its entirity.

Therefore, the forward end of the container 3 will not only be lifted because of the rotation R but also because of the upward movement L of the slide 5. Like this the situation in figure 3 can be obtained, in which the forward end of the container 3 is positioned above the level H of the loading compartment 16 of a car.

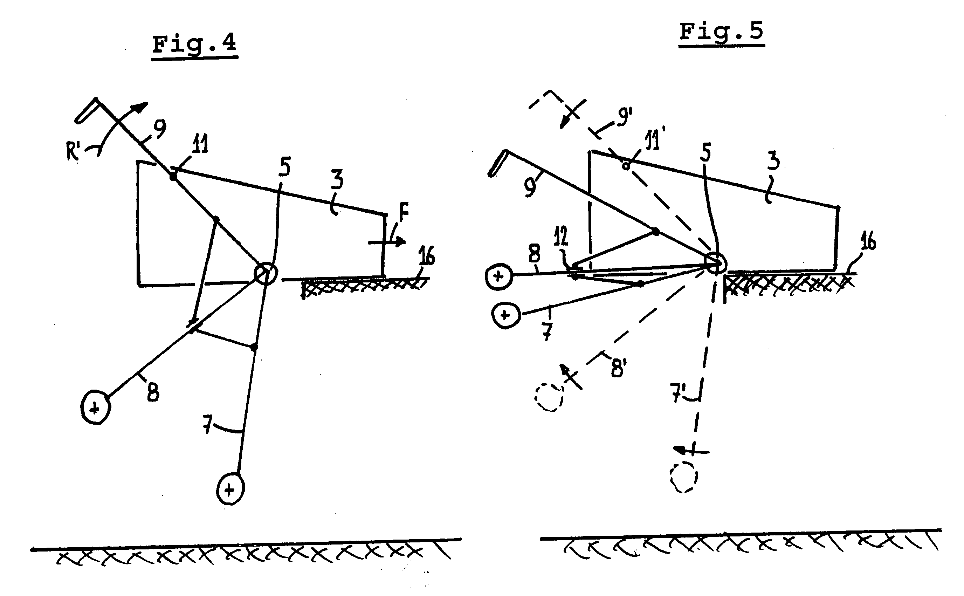

In the position of the shopping cart illustrated in figure 3 it is moved closer towards the loading compartment 16, until the lower side of the container 3 abuts said loading compartment 16. Then, as shown in figure 4, the pushing arm 9 is lifted, which leads to a rotation R' of the shopping cart around its point of contact with the loading compartment 16. When the container 3 has assumed a position which basically corresponds with the position illustrated in figure 4, the shopping cart is pushed forward into the compartment 16 (arrow F).

Not illustrated are means which could be provided to make the forward movement of the shopping cart over the loading compartment 16 easier, such as low friction means or wheels/rollers at the lower side of the container 3.

Neither it is illustrated, that the container 3 can be rotated clockwise in the situation shown in figure 5 when the loading compartment 16 is provided with an elevated ledge at its left end. As a result of such a clockwise rotation the forward lower end of the container 3 then will be brought into contact with the main surface of the loading compartment notwithstanding such an elevated ledge.

As illustrated in figure 5, the forward and rearward legs 7 and 8 can be rotated from an initial position (7' and 8', respectively) towards a position in which they are substantially aligned with the lower side of the container 3. Such a rotation of the legs 7 and 8 is possible, because slide 12 still is free to slide along the rearward leg 8.

It is also possible to disable locking member 11, such that the pushing arm 9 can be rotated downwardly from its initial position 9' towards the legs 7 and 8.

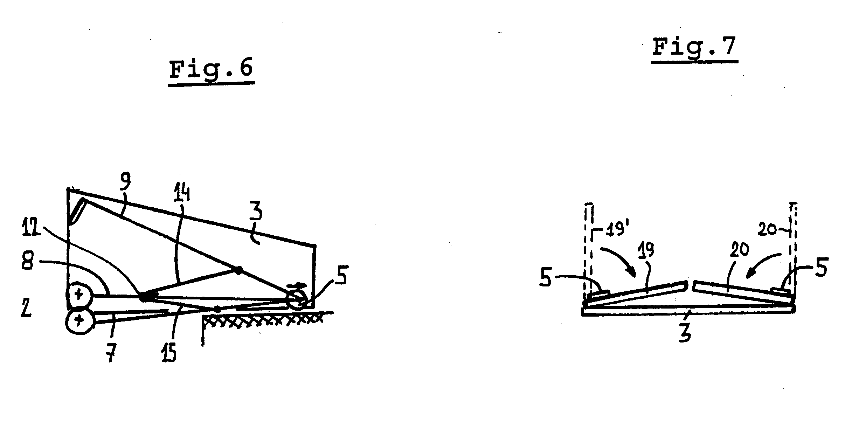

Finally, as illustrated in figure 6, the locking means 6 of the slide 5 (see figure 1) may be released and the slide may be moved forwards along its guide 4 (see figure 1). As a result the legs 7 and 8 and pushing arm 9, which are connected to the slide 5, will be moved towards a position in which they do not or hardly extend beyond the outer circumference of the container 3, as seen in a side elevational view. Therefore, a compact assembly is obtained which may be stowed away easily in the loading compartment of a car.

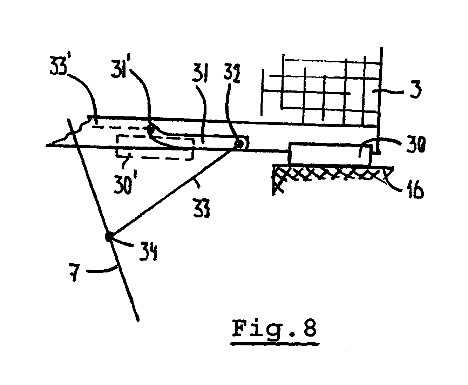

The rotation of the legs from the positions 7' and 8' towards the positions 7 and 8 illustrated in figure 5 could be supported by a contact between the rearward (left) end of the compartment 16 and the forward leg 7; however, such a contact is not always desirable because it could cause damage to the car. Thus, an alternative embodiment of the inventive shopping cart as illustrated in figure 8 is provided with an additional slide 30 which can slide along the lower surface of the container 3 and which projects slightly therebelow. In a guideway 31 provided in the container 3 a first end 32 of a link member 33 is movably and pivotally housed. The opposite end 34 of the link member is pivotally attached to the forward leg 7.

The slide 30 can be positioned on top of the loading compartment 16, and then will slide to the left relative to the container 3 when the shopping cart is pushed into the loading compartment 16. After a short movement of the slide 30 it will contact the end 32 of the link member 33 and push it along, thus causing a rotation of the leg 7 (and other members attached thereto but not illustrated here). When the leg 7 has been rotated towards a position substantially in parallel to the lower side of the container 3 (e.g. as illustrated in figure 5) the end 32 of the link member (which has then assumed a corresponding position 33') reaches a curved end 31' of the guideway 31 and will be moved out of contact with the slide which may move further towards a position 30' without causing a further movement of the link member 33.

As a result no contact will occur between the forward leg 7 and any part of the car, especially a rear bumper. Further such a mechanism could lock the legs in the rotated position.

An additional advantage of the provision of such an additional slide 30 is, that it can be constructed such that the lower side of the container 3 can bridge a locking hook of a rear door or alike projecting above the loading compartment (not illustrated).

In figure 7 it has been represented schematically, that the slides 5 are attached to side walls 19 and 20 of the container 3 are collapsible. It has not been illustrated in figure 7, that also a forward and rearward wall member of the container 3 may assume a collapsed position.

The shopping cart in accordance with the present invention is not limited to the embodiments described before which may be varied widely within the scope of the invention as defined by the appending claims. The mechanism for collapsing the frame may be different from what has been shown. When a mechanism is provided for reducing the angle α between the legs 7 and 8 when the container 3 is rotated, the first linking arm 14 also may be attached to the container 3 directly, and not to the pushing arm 9. Further the slide 12 also could be provided on the forward leg 7, in which case the first linking arm 14 would be positioned at the other side of the slide 5. In such an embodiment it still would be possible to obtain the desired movement of the components of the assembly by choosing appropriate dimensions and positionings of the components.

## Claims

1. Shopping cart, comprising a frame (1) with wheels (2) and a container (3) for goods supported by said frame, which
container is connected to the frame by rotation means having a transverse axis of rotation (18), wherein activatable locking means (6) are provided for preventing or allowing a rotation of the container (3) relative to the frame (1), and wherein the frame is collapsible, and
wherein the frame comprises forward and rearward legs (7;8) which meet at their upper ends and which diverge downwardly, and wherein a mechanism is provided for reducing the angle between the forward and rearward legs when the container is rotated such around the transverse axis of rotation (18) that the forward end of the container is lifted, **characterized in that**
said mechanism comprises a slide (12) which is slidable along a forward or rearward leg (7;8) a first linking arm (14) having a first end hingeably connected to the container and having a second end hingeably connected to the slide (12), and a second linking arm (15) having a first end hingeably connected to the corresponding rearward or forward leg and having a second end hingeably connected to the slide (12), and wherein the slide is lockable to the respective leg.

2. Shopping cart according to claim 1, wherein the slide (12) is slidable along a rearward leg (8).

3. Shopping cart according to claim 1 or 2, wherein the upper ends of the forward and rearward legs (7;8) and the rotation means having said transverse axis of rotation (18) are defined in a second slide (5) which can slide along the container and which is provided with second locking means (6) for preventing or allowing a sliding movement of the second slide (5) relative to the container (3), and wherein the first link-ing arm (14) is releasable from the container or the slide.

4. Shopping cart according to claim 3, wherein the first linking arm (14) is releasable from the container (3).

5. Shopping cart according to claim 4, wherein the second slide (5) further hingeably supports a first end of a pushing arm (9) of which a second end is provided with a grip (10) for a user of the shopping cart, and wherein the pushing arm between its ends is provided with a locking member (11) for defining a releasable connection with the container, and wherein the first end of the first linking arm (14) is hingeably connected to said pushing arm (9) at a location between the ends of the pushing arm.

6. Shopping cart according to any of the claims 3-5, wherein the container comprises collapsible sidewalls (19, 20), the second slide (5) engages said sidewalls and wherein the frame (1) comprises two forward and two rearward legs (7;8).

7. Shopping cart according to any of the claims 1-5, wherein the container comprises an additional slide (30) projecting below and being movable relative to its lower side, and wherein a link member (33) is provided having a first end (32) which is movably and pivotally housed in a guideway (31) of the container (3) and a second end (34) pivotally connected to a leg, preferably a forward leg (7), of the shopping cart, wherein the guideway (31) is positioned such that the additional slide (30) may engage the said first end (32) of the link member (33) when moving relative to the container.

8. Shopping cart according to claim 7, wherein the guideway (31) has a curved end (31') for moving said first end (32) of the link member (33) out of contact with the additional slide (30).

## Patentansprüche

1. Einkaufswagen, der einen Rahmen (1) mit Rädern (2) und ein Behältnis (3) für Waren aufweist, das durch den Rahmen getragen wird,
wobei das Behältnis mit dem Rahmen über eine Drehvorrichtung verbunden ist, die eine Rotationsquerachse (18) hat, wobei eine ansprechbare Arretiervorrichtung (6) bereitgestellt ist, um eine Drehung des Behältnisses (3) relativ zum Rahmen (1) zu verhindern oder zu erlauben, und wobei der Rahmen zusammenklappbar ist und
wobei der Rahmen vorwärts und rückwärts ausgerichtete Schenkel (7,8) aufweist, die sich an ihren oberen Enden treffen und nach unten auseinanderlaufen und wobei ein Mechanismus dazu bereitgestellt ist, den Winkels zwischen den vorwärts und rückwärts ausgerichteten Schenkeln zu verkleinern, wenn das Behältnis so um die Rotationsquerachse (18) gedreht wird, dass das vorwärts ausgerichtete Ende des Behältnisses angehoben wird,
**dadurch gekennzeichnet, dass** der Mechanismus aufweist: eine Führung (12), die entlang eines vorwärts oder rückwärts ausgerichteten Schenkels (7,8) verschiebbar ist, einen ersten Verbindungsarm (14), der ein erstes Ende, das drehbar mit dem Behältnis verbunden ist, sowie ein zweites Ende hat, das drehbar mit der Führung (12) verbunden ist, und wobei die Führung an den betreffenden Schenkel arretierbar ist.

2. Einkaufswagen gemäß Anspruch 1, wobei die Führung (12) entlang des rückwärts ausgerichteten Schenkels (8) verschiebbar ist.

3. Einkaufswagen gemäß Anspruch 1 oder 2, wobei die oberen Enden der vorwärts und rückwärts ausgerichteten Schenkel (7,8) sowie die Drehvorrichtung, die die besagte Rotationsquerachse (18) hat, in einer zweiten Führung (5) definiert sind, die entlang des Behältnisses verschiebbar ist und die mit einer zweiten Arretiervorrichtung (6) ausgestattet ist, um eine Verschiebungsbewegung der zweiten Führung (5) relativ zum Behältnis (3) zu verhindern oder zu erlauben, und wobei der erste Verbindungsarm (14) vom Behältnis oder von der Führung freigebbar ist.

4. Einkaufswagen gemäß Anspruch 3, wobei der erste Verbindungsarm (14) vom Behältnis (3) freigebbar ist.

5. Einkaufswagen gemäß Anspruch 4, wobei die zweiten Führung (5) darüber hinaus drehbar ein erstes Ende eines Schiebearms (9) trägt, wobei ein zweites Ende des Schiebearms mit einem Griff (10) für einen Benutzer des Einkaufswagens ausgestattet ist und wobei der Schiebearm zwischen seinen Enden mit einer Arretiervorrichtung (11) ausgestattet ist, um eine freigebbare Verbindung mit dem Behältnis zu definieren, und wobei das erste Ende des ersten Verbindungsarms (14) drehbar mit dem besagten Schiebearm (9) an einer Stelle zwischen den Enden des Schiebearms verbunden ist.

6. Einkaufswagen gemäß einem der Ansprüche 3-5, wobei das Behältnis zusammenklappbare Seitenwände (19,20) aufweist, die zweite Führung (5) in die besagten Seitenwände greift, und wobei der Rahmen (1) zwei vorwärts und zwei rückwärts ausgerichtete Schenkel (7,8) aufweist.

7. Einkaufswagen gemäß einem der Ansprüche 1-5, wobei das Behältnis eine zusätzliche Führung (30) aufweist, die nach unten hinausragt, und relativ zu seiner Unterseite beweglich ist und wobei ein Verbindungselement (33) bereitgestellt ist, das ein erstes Ende (32), das beweglich und drehbar in einer Führungsnut (31) des Behältnisses (3) untergebracht ist, und ein zweites Ende (34) hat, das drehbar mit einem Schenkel des Einkaufswagens verbunden ist, vorzugsweise einem vorwärts ausgerichteten Schenkel (7), wobei die Führungsnut (31) so positioniert ist, dass die zusätzliche Führung (30) in das besagte erste Ende (32) des Verbindungselements (33) greifen kann, wenn es sich relativ zum Behältnis bewegt.

8. Einkaufswagen gemäß Anspruch 7, wobei die Führungsnut (31) ein gebogenes Ende (31') zum Bewegen des besagten ersten Endes (32) des Verbindungselements (33) aus dem Kontakt mit der zusätzlichen Führung (30) heraus hat.

## Revendications

1. Chariot d'achat comprenant un châssis (1) avec des roues (2), et un réceptacle (3) pour des produits qui est porté par le châssis et qui est relié à celui-ci par des moyens de rotation pourvus d'un axe de rotation transversal (18), étant précisé que des moyens de verrouillage (6) aptes à être actionnés sont prévus pour empêcher ou permettre une rotation du réceptacle (3) par rapport au châssis (1), que le châssis est apte à être plié, qu'il comprend des pieds avant et arrière (7 ; 8) qui se rejoignent à leur extrémité supérieure et qui divergent vers le bas, et qu'il est prévu un mécanisme pour réduire l'angle entre les pieds avant et arrière quand le réceptacle tourne sur l'axe de rotation transversal (18) au point que son extrémité avant est soulevée,
**caractérisé en ce que** le mécanisme comprend un élément coulissant (12) qui est apte à coulisser le long d'un pied avant ou arrière (7 ; 8), un premier bras de liaison (14) qui a une première extrémité articulée sur le réceptacle et une seconde extrémité articulée sur l'élément coulissant (12), et un second bras de liaison (15) qui a une première extrémité articulée sur le pied arrière ou avant correspondant et une seconde extrémité articulée sur l'élément coulissant (12), et l'élément coulissant est apte à être verrouillé sur le pied respectif.

2. Chariot d'achat selon la revendication 1, dans lequel l'élément coulissant (12) est apte à coulisser le long d'un pied arrière (8).

3. Chariot d'achat selon la revendication 1 ou 2, dans lequel les extrémités supérieures des pieds avant et arrière (7 ; 8) et les moyens de rotation pourvus de l'axe de rotation transversal (18) sont définis dans un second élément coulissant (5) qui peut coulisser le long du réceptacle et qui est pourvu de seconds moyens de verrouillage (6) pour empêcher ou permettre un mouvement coulissant du second élément coulissant (5) par rapport au réceptacle (3) ; et le premier bras de liaison (14) est apte à être détaché du réceptacle ou de l'élément coulissant.

4. Chariot d'achat selon la revendication 3, dans lequel le premier bras de liaison (14) est apte à être détaché du réceptacle (3).

5. Chariot d'achat selon la revendication 4, dans lequel le second élément coulissant (5) supporte également de manière articulée une première extrémité d'un bras de poussée (9) dont la seconde extrémité est pourvue d'une poignée (10) pour un utilisateur du chariot ; dans lequel le bras de poussée est pourvu, entre ses extrémités, d'un élément de verrouillage (11) pour définir une liaison amovible avec le réceptacle ; et dans lequel la première extrémité du premier bras de liaison (14) est articulée sur le bras de poussée (9) à un endroit situé entre les extrémités du bras (9).

6. Chariot d'achat selon l'une quelconque des revendications 3 à 5, dans lequel le réceptacle comprend des parois latérales aptes à être pliées (19, 20), le second élément coulissant (5) vient en contact avec les parois latérales et le châssis (1) comprend deux pieds avant et deux pieds arrière (7 ; 8).

7. Chariot d'achat selon l'une quelconque des revendications 1 à 5, dans lequel le réceptacle comprend un élément coulissant supplémentaire (30) qui dépasse de son côté inférieur et qui est mobile par rapport à celui-ci ; dans lequel il est prévu un élément de liaison (33) qui a une première extrémité (32) logée, mobile et pivotante, dans une glissière (31) du réceptacle (3), et une seconde extrémité (34) reliée pivotante à un pied, de préférence un pied avant (7), du chariot ; et dans lequel la glissière (31) est placée de telle sorte que l'élément coulissant supplémentaire (30) puisse venir en contact avec la première extrémité (32) de l'élément de liaison (33) lorsqu'il se déplace par rapport au réceptacle.

8. Chariot d'achat selon la revendication 7, dans lequel la glissière (31) a une extrémité courbe (31) pour déplacer la première extrémité (32) de l'élément de liaison (33) et la désolidariser de l'élément coulissant supplémentaire (30).
